# EUROPÄISCHE PATENTSCHRIFT

(11) **EP 0 445 605 B1**
(45) Veröffentlichungstag und Bekanntmachung des Hinweises auf die Patenterteilung: **14.09.1994**
(21) Anmeldenummer: 91102616.9
(22) Anmeldetag: 22.02.1991
(51) Int. Cl.: B23Q 1/26, B23Q 11/00

(54) **Einrichtung zur Vorspannung eines geführten Maschinenteils**
Device for preloading a guided machine part
Dispositif pour la précontrainte d'un élément guidé de machine

(30) Priorität: 05.03.1990 DE 4006853
(43) Veröffentlichungstag der Anmeldung: 11.09.1991
(73) Patentinhaber: Firma Carl Zeiss, D-73446 Oberkochen (DE); CARL-ZEISS-STIFTUNG, HANDELND ALS CARL ZEISS, D-73446 Oberkochen (DE)
(72) Erfinder: Enderle, Eckard, W-7080 Aalen-Dewangen (DE); Leitenberger, Werner, W-7920 Heidenheim-Mergelstetten (DE); Müller, Helmut, W-7070 Schwäbisch Gmünd-Grossdeinbach (DE)

(56) Entgegenhaltungen:
- EP-A- 0 176 496
- EP-A- 0 317 787
- DE-A- 2 829 715
- US-A- 3 272 568
- US-A- 4 558 909

## Beschreibung

Die Erfindung betrifft eine Führungsanordnung nach dem Oberbegriff des Anspruchs 1 (EP-A1-0 317 787) sowie ein Koordinatenmeßgerät nach dem Oberbegriff des Anspruchs 10 (DE-A-28 29 715).

Zur Führung der beweglichen Meßschlitten von Koordinatenmeßgeräten werden häufig Luftlager verwendet, über die sich das betreffende Maschinenteil auf seiner Führung abstützt. Die Vorspannung der Luftlager wird dann durch das Eigengewicht des geführten Teils aufgebracht.

Um die Luftlager an ihrem optimalen Arbeitspunkt zu betreiben, an dem diese eine möglichst hohe Steifigkeit besitzen, werden jedoch relativ große Vorspannkräfte benötigt. Dies hat zur Folge, daß das geführte Teil eine relativ hohe Masse besitzen muß. Die Masse hingegen begrenzt die erzielbaren Beschleunigungen bzw. Geschwindigkeiten, mit denen das Teil bewegt werden kann.

Oft werden die Lager von geführten Maschinenteilen über angefederte Gegenlager vorgespannt. Diese Maßnahme läßt sich konstruktiv mit geringem Aufwand jedoch nur dann ergreifen, wenn das geführte Teil in einer einzigen Richtung linear beweglich ist. Handelt es sich bei der betreffenden Führung um eine sogenannte ebene Führung, auf der das betreffende Maschinenteil in zwei Freiheitsgraden gleichzeitig beweglich gelagert ist, dann ist es praktisch nicht möglich, den für das Gegenlager erforderlichen Umgriff auf die Rückseite der Führung zu realisieren.

Aus der US-A-45 58 909 sind sogenannte selbstansaugende Luftlager bekannt. Diese Luftlager besitzen an ihrer Peripherie einen Saugkanal, der an Unterdruck gelegt werden kann und dann das Lager gegen die betreffende Führungsfläche zieht. Da jedoch für den Saugkanal nur eine Fläche zur Verfügung steht, die kleiner als das Luftlager selbst ist, und zur Erzeugung der Saugkraft nur eine Druckdifferenz von höchstens einer Atmosphäre zur Verfügung steht, lassen sich mit diesem bekannten Lager auch nur geringe Vorspannkräfte erzeugen. Diese Kräfte reichen in der Regel nicht aus, um das Lager in dem für möglichst hohe Steifigkeit optimalen Arbeitsbereich zu betreiben.

In der DE-A-28 29 715 ist ein Koordinatenmeßgerät beschrieben, dessen über Luftlager geführte Maschinenteile zusätzlich mit Hilfe von Magneten gegen ihre Führung vorgespannt werden. Hierzu ist es jedoch erforderlich, daß die betreffende Führung ferromagnetisches Material enthält. Dies ist aus vielerlei Gründen nachteilig.

In der EP-A1-0 317 787 ist eine Zustelleinrichtung beschrieben, deren bewegliches Teil sich über ein Vakuum vorgespanntes Luftlager auf einer ebenen Führungsfläche abstützt. Über die Größenverhältnisse zwischen der Druckluftzone und der Vakuumzone des Lagers werden in der Schrift keine Angaben gemacht.

Es ist die Aufgabe der vorliegenden Erfindung, eine Vorspanneinrichtung für geführte Maschinenteile zu schaffen, mit der ohne großen konstruktiven Aufwand relativ hohe Vorspannkräfte erzeugbar sind.

Diese Aufgabe wird gemäß den im Anspruch 1 bzw. 10 angegebenen Merkmalen gelöst.

Die gemäß der Erfindung zwischen den Lagern des geführten Teils angeordnete Saugglocke eignet sich im besonderen Maße dazu, die Vorspannkraft zu erzeugen, wenn das geführte Teil ohnehin über Luftlager auf seine Führung abgestützt ist. Denn dann sind einmal die zur Versorgung mit über- bzw. Unterdruck erforderlichen Einrichtungen bereits an der Maschine vorhanden und die für die Luftlager vorgesehene Führungsfläche ist eben und ausreichend groß und kann deshalb gleichzeitig als Gegenfläche für die Saugglocke dienen.

Erfindungsgemäß wählt man die effektive Fläche der Saugglocke groß gegen die wirksame Fläche der Lager, auf denen sich das Maschinenteil abstützt. Denn dann lassen sich auch mit relativ niedrigen Druckdifferenzen ausreichend hohe Vorspannkräfte für die Lager erzeugen.

Weiterhin ist es vorteilhaft, wenn die Saugglocke in der Nähe der Lagerstellen des Maschinenteils an diesem befestigt ist, beispielsweise sich direkt auf den tragenden Luft lagern abstützt. Der Kraftfluß der Vorspannkraft ist dann an dem Teil vorbeigeleitet, so daß sich dieses auch nicht verformen kann.

Die Saugglocke besitzt zweckmäßig eine elastische Dichtlippe, die reibungsarm auf der Führungsfläche des beweglichen Teils aufliegt und die Saugglocke gegen diese Fläche abdichtet.

Besonders vorteilhaft ist es jedoch, zur Abdichtung der Saugglocke einen selbstgeführten Kapillarspalt vorzusehen. Dieser läßt sich beispielsweise durch einen mittels Überdruck auf der Führungsfläche "schwimmenden" Ring erzeugen. Da hierbei keine Berührung zwischen Dichtfläche und Untergrund erfolgt, tritt keine Reibung und demzufolge auch kein Abrieb auf.

Besondere Vorteile bietet die Erfindung zur Vorspannung von Maschinenteilen, die sich bezüglich zweier Freiheitsgrade, beispielsweise in einer Ebene beweglich auf ihrer Führung abstützen und wo es schwierig ist, Umgriffe oder magnetische Gegenanker vorzusehen, die beide jeweils lineare Führungen voraussetzen.

Die Erfindung wird in der nachfolgenden Beschreibung von Ausführungsbeispielen anhand der Figuren 1-3 der beigefügten Zeichnungen näher erläutert.
- Figur 1 und 2: Sind Skizzen, die ein Koordinatenmeßgerät mit der erfindungsgemäßen Einrichtung zur Vorspannung des dort mit (8) bezeichneten, beweglichen Ständers im Schnitt in einer vertikalen Ebene (Figur 1) bzw. in Aufsicht bei abgenommener Verkleidung (Figur 2) zeigen;
- Figur 3: ist eine stark vergrößerte Schnittzeichnung des in Figur 1 mit III bezeichneten, gestrichelt umrandeten Bereichs des Gerätes;
- Figur 4: ist eine Schnittzeichnung eines zweiten alternativen Ausführungsbeispiels für die in Figur 3 dargestellte Saugglocke;
- Figur 5: ist ein Diagramm, das die radiale Druckverteilung unter der Saugglocke aus Figur 4 zeigt;
- Figur 6: zeigt die Saugglocke aus Figur 4 in Ansicht von unten.

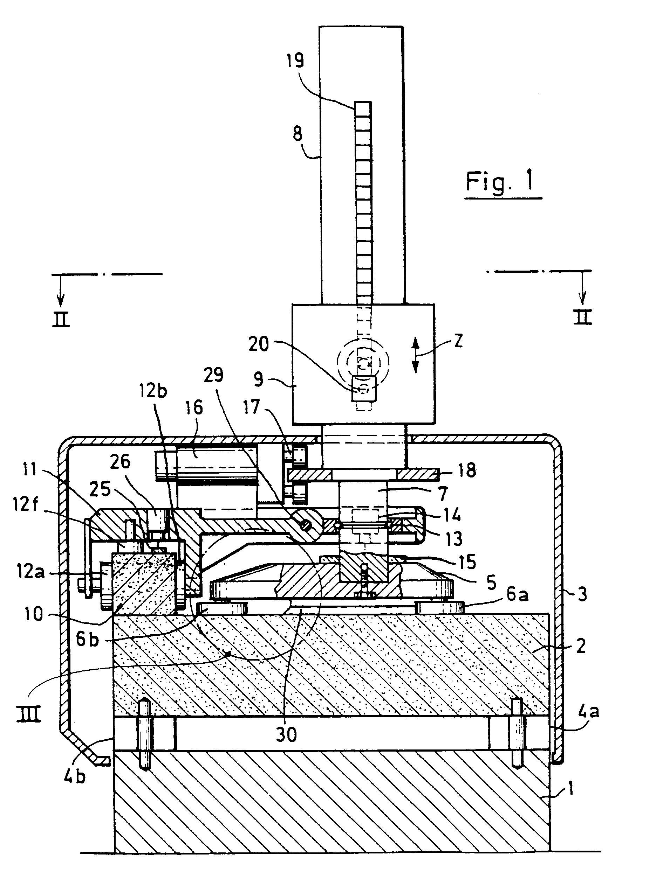

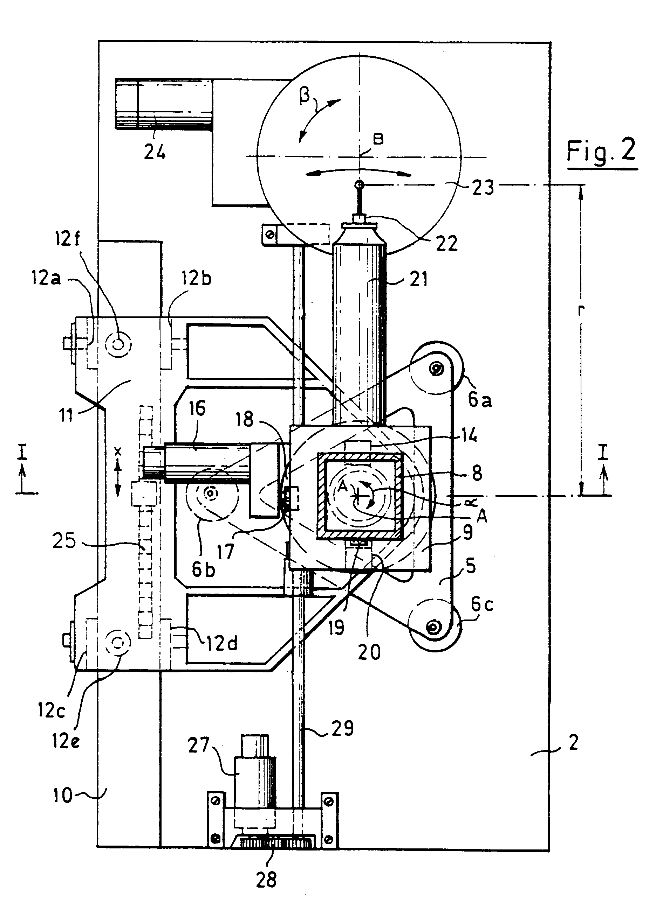

Das in Figur 1 und 2 dargestellte Koordinatenmeßgerät besitzt einen Maschinentisch (2), der über vier Schwingungsdämpfer auf dem Fundament (1) der Maschine ruht. In der Darstellung nach Figur 1 sind nur die beiden Schwingungsdämpfer (4a) und (4b) zu sehen.

Die Oberfläche des Tisches (2) bildet eine ebene Führung für einen Ständer (8), der sich dort mit seinem Fuß (5) über drei Luftlager (6a-c) abstützt und wie noch beschrieben wird linear verschieblich und drehbar auf der Tischoberfläche geführt ist.

An einer seitlich auf dem Tisch (2) befestigten Führungsleiste (10) ist mittels sechs Luftlager (12a-f) ein Schlitten (11) in Richtung des Pfeils (x) linear beweglich geführt. Dieser Schlitten (11) wird über einen Motor (27) und ein Getriebe (28) von einer Welle (29) angetrieben. Die Drehbewegung der glatten Welle (29) kann beispielsweise durch ein sogenanntes Rollringgetriebe am Schlitten (11) auf diesen übertragen sein. Solche Antriebe sind an sich bekannt. Die Bewegung des Schlittens wird durch einen photoelektrischen Geber (26) erfaßt, der einen auf der Führungsleiste (10) befestigten Maßstab (25) abtastet.

In dem Schlitten (11) ist der Ständer (8) im Bereich des zylindrischen Zwischenstücks (7), das ihn mit seinem Fuß (5) verbindet, in ein Radiallager (13) eingesetzt. Dieses Radiallager (13) ermöglicht es, den Ständer (8) gegenüber dem Schlitten (11) entsprechend dem Pfeil (α) in Figur 2 um die dort mit (A) bezeichnete Achse zu drehen. Achsial stützt sich hierbei der Ständer (8) auch hinsichtlich der Drehbewegung über die Luftlager (6a-c) auf der Oberfläche des Tisches (2) ab. Hierbei verhindert die relativ große Basis dieses Achsiallagers ein Taumeln des Ständers (8) im Zuge der Drehbewegung ebenso wie ein Verkippen während der Linearbewegung durch den Schlitten (11).

Für den Antrieb der Drehbewegung trägt der Schlitten (11) einen Motor (16), der über ein Reibradgetriebe (17) auf eine mit dem Ständer (8) verbundene Scheibe (18) wirkt. Das Ausmaß der Drehbewegung, d.h. der Drehwinkel (α) wird durch einen am Schlitten (11) befestigten photoelektrischen Geber (14) gemessen. Dieser tastet einen auf am Fuß (5) des Ständers (8) befestigten Teilkreis (15) ab.

Die Antriebe und Meßsysteme im unteren Bereich des Ständers (8) sind durch eine Abdeckung (3) verkleidet, die im oberen Teil, an der Stelle, an der der Ständer (8) durch die Abdeckung (3) hindurchgreift, einen sich in Führungsrichtung (x) erstreckenden Schlitz besitzt. In dem Bereich oberhalb der Abdeckung (3) ist der Ständer (8) rechteckig geformt und an ihm ist ein Vertikalschlitten (9) in Richtung des mit (z) bezeichneten Pfeils verschiebbar gelagert. Der Schlitten (9) trägt den Meßarm (21) des Koordinatenmeßgerätes, an dessen vorderes Ende der Tastkopf (22) angesetzt ist. Die Linearbewegung des Schlittens (9) wird mit Hilfe eines photoelektrischen Gebers (20) und eines an der Säule (8) befestigten Maßstabs (19) gemessen. Der Antrieb für den Schlitten (9) ist in den Figuren nicht dargestellt.

Auf der dem Tastkopf (22) zugewandten Seite ist in den Tisch (2) ein Drehtisch (23) mit einem Antrieb (24) eingebaut. Die Drehachse dieses Drehtisches ist mit (B) bezeichnet. Die Verbindungslinie der beiden Achsen (A) des Ständers (8) und (B) des Drehtisches verläuft parallel zur Führungsrichtung (x) des Schlittens (11). Der Drehtisch (23) nimmt das zu vermessende Werkstück auf.

Zur Vermessung eines Werkstückes wird der Tastkopf (22) mit Hilfe der Schlitten (11) und (9) bzw. deren Antriebe in den beiden orthogonalen Koordinatenrichtungen (x) und (z) verfahren. Die dritte fehlende Koordinatenrichtung (y) ist ersetzt durch eine Schwenkbewegung des Ständers (8) um die Achse (A). Hierbei führt der Tastkopf eine entsprechend der Hebellänge (r) des Meßarmes mehr oder minder stark gekrümmte Tangentialbewegung aus.

Damit der Ständer (8) durch den Antrieb (27) möglichst schnell über die Oberfläche des Tisches (2) bewegt werden kann, ist er in Leichtbauweise ausgeführt, d.h. er besteht aus Aluminium. Aus diesem Grunde reicht sein Gewicht allein nicht aus, um die Luftlager (6a-c) so vorzuspannen, daß sie im Bereich optimaler Steifigkeit arbeiten. Deshalb ist zwischen den Luftlagern (6a-c) im Fuß (15) des Ständers (8) eine Saugglocke (30) befestigt, die mit ihrer offenen Seite der Oberfläche des Tisches (2) zugewandt ist und den Ständer (8) mit Hilfe des in ihrem Innern herrschenden Unterdrucks zusätzlich gegen diese Führungsfläche zieht.

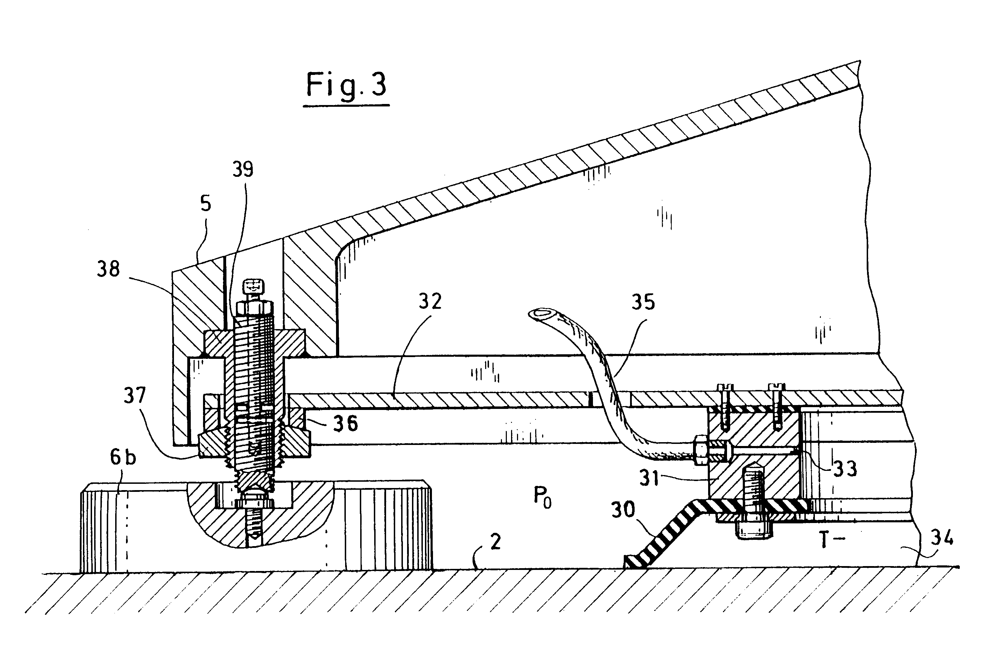

Der Aufbau und die Befestigung der Saugglocke ist detaillierter in Figur 3 dargestellt. Dort ist das eine mit (6b) bezeichnete Luftlager zu sehen, auf dem sich ein Schenkel des dreieckförmigen Fußes (5) des Ständers (8) abstützt. Hierzu ruht der Fuß (5) an dieser Stelle über einen verstellbaren Konterbolzen (39) auf einem sphärischen Aufnahmeteil im Luftlager (6b). Diese Art der Befestigung ist allgemein üblich.

Das Tragteil (38) im Fuß (5), in das der Konterbolzen (39) hineingeschraubt ist, besitzt ein Außengewinde, auf das eine Mutter (37) aufgeschraubt ist, deren Oberseite ebenfalls sphärisch geformt ist. Auf der Mutter (37) liegt über ein konkav-sphärisches Zwischenstück (36) ein wie der Fuß (5) in der Aufsicht dreieckförmig geformtes Federblech (32) auf. Dieses Federblech (32) ist in der gleichen Weise auch auf die beiden übrigen Luftlager (6a) und (6c) im Fuß (5) des Ständers (8) aufgelegt.

An der Unterseite des Federblechs (32) ist zentrisch zur Achse des Ständers (8) ein Ring (31) angeschraubt, an dessen Unterseite wiederum eine ebenfalls ringförmige, elastische Dichtlippe (30) angesetzt ist.

Das Innere des aus der Dichtlippe (30), dem Ring (31) und dem zentrischen Bereich des Federblechs (32) gebildeten Topfes (34) ist teilweise evakuiert und hierzu über eine Bohrung (33) im Ring (31) an eine Saugleitung (35) angeschlossen. Auf diese Weise entsteht eine federnd aufgehängte Saugglocke, die den Fuß (5) des Ständers (8) mit einer zusätzlichen Vorspannkraft gegen die Oberfläche des Tisches (2) zieht. Diese Kraft ist abhängig von der Druckdifferenz zwischen dem Druck (T-) im Innern der Saugglocke (34) und dem atmosphären Druck, sowie der Querschnittsfläche des Bereiches, der von der Dichtlippe (30) eingeschlossen ist.

Mit Hilfe der Mutter (37) und der beiden entsprechenden Muttern auf den beiden anderen Luftlagern läßt sich der Saugtopf so in der Höhe verstellen, daß die Dichtlippe (30) das Vakuum gerade abschließt, von diesem jedoch nicht mit allzu hoher Kraft gegen die Tischoberfläche gezogen wird. Die Reibung zwischen der Dichtlippe (30) und der Tischoberfläche kann dadurch also minimiert werden. Verformungen des Ständers (8) bzw. in seinem Fuß (5) werden durch die zusätzliche Saugglocke nicht verursacht, da letztere sich direkt auf den Luft lagern abstützt, der Kraftfluß also am Ständer vorbeigeleitet ist.

Im vorliegenden Ausführungsbeispiel wurde die Erfindung an einem Koordinatenmeßgerät gezeigt, dessen Ständer in einer Richtung linear verschiebbar ist und gleichzeitig mit seinem Flächenlager drehbar aufsitzt. Die Erfindung kann jedoch offensichtlich ebensogut bei Koordinatenmeßgeräten verwendet werden, deren Ständer beispielsweise in zwei zueinander senkrechten Richtungen (x), (y) frei beweglich über die Tischoberfläche (2) geführt ist.

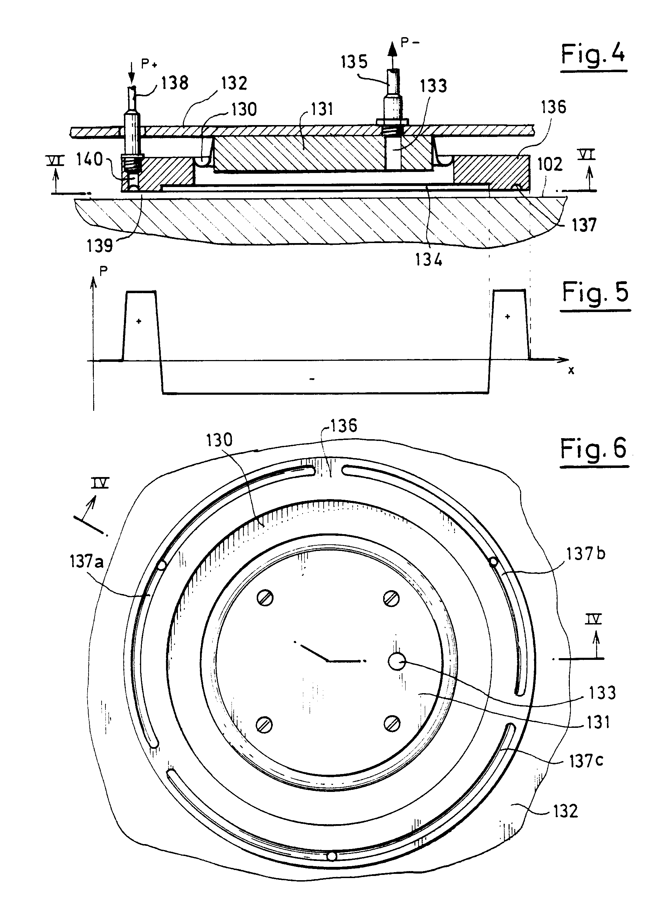

In den Figuren 4-6 ist ein weiteres Ausführungsbeispiel zur Realisierung der Saugglocke dargestellt. Dort ist die Oberfläche des Maschinentisches mit (102) bezeichnet und das Federblech, über das die Saugglocke auf den nicht dargestellten Luftlagern im Fuße des Ständers aufliegt, trägt die Bezugsziffer (132).

Die Saugglocke an der Unterseite des Federbleches (132) besitzt einen Lagerkörper (131), der über eine Bohrung (133) mit der Anschlußleitung (135) für den im Innern der Saugglocke zu erzeugenden Unterdruck verbunden ist. Der Lagerkörper (131) ist über eine ihn ringförmig umgebende Rollmembran (130) luftdicht mit einem Dichtring (136) verbunden. Dieser Dichtring (136) liegt schwimmend auf der Tischoberfläche (102) auf. Hierzu ist an der Unterseite des Dichtringes (136) ein ringförmiger Kanal (137) eingearbeitet, der über eine Bohrung (140) von einem Anschlußstück (138) mit Überdruck versorgt wird. Der Ring (136) bildet somit ein schwimmend auf der Tischoberfläche (102) aufliegendes Luftlager und der Kapillarlagerspalt (139) dieses Luftlagers dichtet das Innere (134) der durch die Teile (130, 131 und 136) gebildeten Saugglocke gegen den Außendruck ab. Der überdruck im Ringkanal (137) ist so gewählt, daß er den Lagerspalt (139) auf etwa 6 µm Spalthöhe hält. Durch diesen sehr kleinen Spalt wird für den geringen Unterdruck im Innern der Saugglocke ein hinreichend hoher Strömungswiderstand erzeugt, so daß eine Saugpumpe mit geringer Förderleistung den Unterdruck aufrechterhalten kann. Durch die elastische Rollmembran (130) ist der Dichtring (136) vom Lagerkörper (131) entkoppelt. Für die Montage und im Betrieb sind somit große vertikale Höhenänderungen zwischen der Tischoberfläche (102) und dem Maschinenteil, das von der Saugglocke dagegen gezogen wird, zulässig, ohne daß hierbei die Dichtfunktion beeinträchtigt wird, d.h. der Dichtspalt (139) bleibt konstant. Eine aufwendige Justage der das Maschinenteil tragenden Luftlager bzw. der Saugglocke entfällt und, da keine Berührung zwischen Saugglocke und Tischoberfläche auftritt, ist jegliche Form von Reibung und Abrieb vermieden.

Der Ringkanal (137) ist wie aus Figur 6 hervorgeht zweckmäßig in drei sich über einen Winkelbereich von ca. 120° erstreckende Einzelsegmente (137a, b und c) aufgeteilt, die jeweils über eigene Bohrungen und eigene Drosseln mit Überdruck versorgt werden. Durch diese Maßnahme liegt der Dichtring (136) gegen Verkippungen stabil auf der Tischfläche (102) auf und der Dichtspalt (139) ist über den gesamten Außenumfang des Ringes (136) konstant.

In Figur 5 ist der Druck unter der Saugglocke über ihren Durchmesser aufgetragen. Man sieht, daß im Bereich des Dichtringes (136) außenumfänglich Überdruck (P+) herrscht. Vom Innenumfang im Bereich der dort an den Ring angearbeiteten Vertiefung wirkt hingegen der in der Saugglocke herrschende Unterdruck (P-) auf den Dichtring (136) und spannt diesen in ähnlicher Weise vor, wie die hier nicht dargestellten Luftlager, auf denen sich das Federblech (132) abstützt. Durch diese Vorspannung wird auch der Dichtspalt (139) des Dichtringes (136) stabil und klein gehalten.

## Patentansprüche

1. Führungsanordnung mit einem beweglichen, in mindestens einer Richtung geführten Maschinenteil (5-8), das sich über mehrere Lager (6a-c) auf seiner Führung (2) abstützt, die durch eine Zusatzeinrichtung vorgespannt sind, dadurch gekennzeichnet, daß die Zusatzeinrichtung eine zwischen den Lagern angeordnete Saugglocke (34, 134) ist, deren effektive Fläche groß gegen die wirksame Fläche der Lager (6a-c) ist, auf denen sich das Maschinenteil (5-8) abstützt.

2. Führungsanordnung nach Anspruch 1, dadurch gekennzeichnet, daß die Saugglocke (34) direkt an die Führungsfläche (2) für das Maschinenteil (5-8) angesetzt ist.

3. Führungsanordnung nach Anspruch 1, dadurch gekennzeichnet, daß die Saugglocke (34) in der Nähe der Lagerstellen des Maschinenteils (5-8) an diesem befestigt ist.

4. Führungsanordnung nach Anspruch 1, dadurch gekennzeichnet, daß die Saugglocke (34) federnd mit dem Maschinenteil (5-8) verbunden ist.

5. Führungsanordnung nach Anspruch 1, dadurch gekennzeichnet, daß die Lager (6a-c) Gaslager bzw. Luftlager sind.

6. Führungsanordnung nach Anspruch 1, dadurch gekennzeichnet, daß das Maschinenteil (5-8) sich bezüglich zweier Freiheitsgrade beweglich auf einer ebenen Führung (2) abstützt.

7. Führungsanordnung nach Anspruch 1, dadurch gekennzeichnet, daß die Saugglocke (34) eine elastische Dichtlippe (30) besitzt, die reibungsarm auf der Führungsfläche (2) aufliegt.

8. Führungsanordnung nach Anspruch 1, dadurch gekennzeichnet, daß die Saugglocke (134) über einen schwimmend auf der Führungsfläche (102) aufliegenden Dichtring (136) abgedichtet ist.

9. Führungsanordnung nach Anspruch 8, dadurch gekennzeichnet, daß der Ring (136) nach Art eines Luftlagers ausgebildet ist, wobei der Lagerspalt (139) als Kapillardichtspalt wirkt, und über eine elastische Membran (130) Luftdicht mit einem Lagerkörper (131) der Saugglocke (134) verbunden ist.

10. Koordinatenmeßgerät mit einem beweglichen, in mindestens einer Richtung geführten Maschinenteil (5-8), das sich über mehrere Lager (6a-c) auf seiner Führung (2) abstützt, die durch eine Zusatzeinrichtung vorgespannt sind, dadurch gekennzeichnet, daß die Zusatzeinrichtung eine zwischen den Lagern (6a-c) angeordnete Saugglocke (34) ist, die das Maschinenteil infolge von Unterdruck gegen die Führung (2) zieht, und deren effektive Fläche groß gegen die wirksame Fläche der Lager (6a-c) ist, auf denen sich das Maschinenteil (5-8) abstützt.

11. Koordinatenmeßgerät nach Anspruch 10, dadurch gekennzeichnet, daß die Saugglocke (34) in der Nähe der Lagerstellen des Maschinenteils (5-8) federnd an diesem befestigt ist.

## Claims

1. A guiding device comprising a movable machine part (5-8) which is guided at least in one direction and rests on its guide (2) via several bearings (6a-c) being prestressed by an additional device characterized by the fact that said additional device is a suction bell (34,134) arranged between the bearings, and that the effective area of the suction bell (34,134) is large as compared with the effective surface of the bearings (6a-c) on which the machine part (5-8) rests.

2. A guiding device in accordance with claim 1, characterized by the fact that the suction bell (34) is arranged directly on the guide surface (2) for the machine part (5-8).

3. A guiding device according to claim 1, characterized by the fact that the suction bell (34) is fastened to the machine part (5-8) in the vicinity of the bearing places of said machine part.

4. A guiding device according to claim 1, characterized by the fact that the suction bell (34) is connected under spring action to the machine part (5-8).

5. A guiding device according to claim 1, characterized by the fact that the bearings (6a-c) are gas bearings or air bearings.

6. A guiding device according to claim 1, characterized by the fact that the machine part (5-8) rests movably on a flat guide (2) with respect to two degrees of freedom.

7. A guiding device according to claim 1, characterized by the fact that the suction bell (34) has an elastic sealing lip (30) which rests with slight friction on the guide surface (2).

8. A guiding device according to claim 1, characterized by the fact that the suction bell (134) is sealed off via a sealing ring (136) which floats on the guide surface (102).

9. A guiding device according to claim 8, characterized by the fact that the ring (136) is developed in the manner of an air bearing, the bearing slot (139) acting as capillary sealing slot and being connected via an elastic membrane (130) in air-tight manner with a bearing body (131) of the suction bell (134).

10. A coordinate measuring machine having a moveable machine part (5-8) which is guided in at least one direction and rests via several bearings (6a-c) on its guide (2), the bearings being prestressed by an additional device, characterized by the fact that said additional device is a suction bell (34) which is arranged between the bearings (6a-c) and pulls the machine part against the guide (2) as a result of vacuum, and that the effective area of the suction bell (34,134) is large as compared with the effective surface of the bearings (6a-c) on which the machine part (5-8) rests.

11. A coordinate measuring machine according to claim 10, characterized by the fact that the suction bell (34) is fastened to the machine part (5-8) in the vicinity of the bearing places of said machine part.

## Revendications

1. Dispositif de guidage comportant un élément mobile de machine (5-8), guidé au moins dans une direction et qui prend appui sur son guide (2) par l'intermédiaire de plusieurs paliers (6a-c), qui sont précontraints par un dispositif additionnel, caractérisé en ce que le dispositif additionnel est une cloche aspirante (34, 134) disposée entre les paliers et dont la surface effective est grande par rapport à la surface active des paliers (6a-c), sur lesquels prend appui l'élément de machine (5-8).

2. Dispositif de guidage selon la revendication 1, caractérisé en ce que la cloche aspirante (34) est montée directement sur la surface de guidage (2) pour l'élément de machine (5-8).

3. Dispositif de guidage selon la revendication 1, caractérisé en ce que la cloche aspirante (34) est fixée à proximité des paliers de l'élément de machine (5-8), sur cet élément de machine.

4. Dispositif de guidage selon la revendication 1, caractérisé en ce que la cloche aspirante (34) est reliée élastiquement à l'élément de machine (5-8).

5. Dispositif de guidage selon la revendication 1, caractérisé en ce que les paliers (6a-c) sont des paliers à gaz ou des paliers à air.

6. Dispositif de guidage selon la revendication 1, caractérisé en ce que l'élément de machine (5-8) prend appui sur un guide plat (2) de manière à être déplaçable suivant deux degrés de liberté.

7. Montage suivant la revendication 1, caractérisé par le fait que la cloche aspirante (34) possède une lèvre d'étanchéité élastique (30), qui s'applique avec un faible frottement sur la surface de guidage (2).

8. Dispositif de guidage selon la revendication 1, caractérisé en ce que la cloche aspirante (134) est étanchéifiée par l'intermédiaire d'une bague d'étanchéité (136) qui s'applique à l'état flottant sur la surface de guidage (102).

9. Dispositif de guidage selon la revendication 8, caractérisé en ce que la bague (136) est agencée à la manière d'un palier à air, la fente (139) du palier agissant en tant que fente d'étanchéité capillaire, et est reliée d'une manière étanche à l'air, par l'intermédiaire d'une membrane élastique (130), à un corps de support (131) de la cloche aspirante (134).

10. Appareil de mesure de coordonnées comportant un élément mobile de machine (5-8), guidé dans au moins une direction et qui prend appui sur son guide (2) par l'intermédiaire de plusieurs paliers (6a-c), qui sont précontraints par un dispositif additionnel, caractérisé en ce que le dispositif additionnel est une cloche aspirante (34) disposée entre les paliers et dont la surface effective est grande par rapport à la surface active des paliers (6a-c), sur lesquels prend appui l'élément de machine (5-8).

11. Appareil de mesure de coordonnées selon la revendication 10, caractérisé en ce que la cloche aspirante (34) est fixée élastiquement, à proximité des paliers de l'élément de machine (5-8), sur cet élément de machine.
